**Europäisches Patentamt**

**European Patent Office**

**Office européen des brevets**

(19)

(11) Numéro de publication : **0 629 062 A1**

(12) ## DEMANDE DE BREVET EUROPEEN

(21) Numéro de dépôt : **94401153.5**

(22) Date de dépôt : **25.05.94**

(51) Int. Cl.⁵ : **H04L 7/033**

(30) Priorité : **25.05.93 FR 9306230**

(43) Date de publication de la demande :
**14.12.94 Bulletin 94/50**

(84) Etats contractants désignés :
**AT BE CH DE ES FR GB IT LI NL SE**

(71) Demandeur : **ALCATEL CIT**
**12 Rue de la Baume**
**F-75008 Paris (FR)**

(72) Inventeur : **Garando, Sylvie**
**2, Placette des Arbousiers**
**F-91440 Bures sur Yvette (FR)**

(74) Mandataire : **Sciaux, Edmond et al**
**c/o SOSPI,**
**14-16 rue de la Baume**
**F-75008 Paris (FR)**

(54) **Dispositif de rephasage d'un signal numérique transmis suivant une transmission synchrone et susceptible d'être affecté de gigue.**

(57)    Ce dispositif comporte :

— des moyens (2) pour échantillonner ledit signal numérique par N signaux d'horloge d'échantillonnage déphasés les uns par rapport aux autres de $\frac{T}{N}$, où T désigne la période d'un signal d'horloge locale,

— des moyens (3) pour repérer, à partir des échantillons ainsi obtenus, les transitions dudit signal numérique, et pour en déduire des échantillons dits sélectionnés de ce signal, choisis pour représenter ses valeurs numériques successives,

— des moyens (5) pour générer un signal numérique dit intermédiaire, ayant mêmes valeurs numériques que le signal numérique incident et dont les transitions correspondent auxdits instants d'échantillonnage sélectionnés, et

— des moyens (7, 8, 9, 10) de rephasage dudit signal numérique intermédiaire par rapport audit signal d'horloge local, comportant eux-mêmes des moyens pour faire subir à ce signal intermédiaire un retard variant par pas de T, dans un sens ou dans l'autre, à partir d'une valeur initiale déterminée, à chaque glissement, dû à la gigue, entraînant un rattrapage, dans un sens ou dans l'autre, des transitions dudit signal d'horloge locale par les transitions dudit signal numérique intermédiaire.

FIG.1

EP 0 629 062 A1

La présente invention concerne un dispositif de rephasage d'un signal numérique transmis suivant une transmission synchrone et susceptible d'être affecté de gigue.

Un tel dispositif est notamment utilisable dans des équipements dits de ligne, ou dans des équipements dits de terminaison, d'une liaison de transmission de signaux numériques.

La présente invention a ainsi pour objet un dispositif de réception d'un signal numérique susceptible d'être affecté de gigue, comprenant : une horloge locale fournissant un signal d'horloge locale de période constante T appropriée à l'échantillonnage dudit signal numérique des moyens pour générer, à partir du signal d'horloge locale, un ensemble de N signaux d'horloge d'échantillonnage de même période T que le signal d'horloge locale, mais déphasés chacun du suivant de T/N; caractérisé en ce qu'il comprend en outre : des moyens pour échantillonner ledit signal numérique à l'aide de chacun desdits signaux d'horloge d'échantillonnage; des moyens pour repérer, à partir des échantillons ainsi obtenus, les transitions dudit signal numérique, ainsi que pour en dériver un signal numérique dit intermédiaire ayant les mêmes valeurs numériques que ledit signal numérique et dont les transitions correspondent à un signal d'horloge d'échantillonnage sélectionné.

L'invention a en outre pour objet un dispositif de réception d'un signal numérique ayant fait l'objet d'une transmission synchrone, mais susceptible d'être affecté d'une gigue, comprenant : une horloge locale (CK) fournissant un signal d'horloge locale de période T appropriée à l'échantillonnage dudit signal numérique; et des moyens de réception fournissant un signal numérique dit intermédiaire ayant les mêmes valeurs numériques que ledit signal numérique, et dont les transitions successives correspondent à celles dudit signal d'horloge ; caractérisé en ce qu'il comprend en outre : des moyens pour détecter un éventuel glissement dans le temps, dû à la gigue entre les transitions dudit signal intermédiaire et de ladite horloge locale; ainsi que des moyens de rephasage opérant un déphasage sélectif, par pas de T, dudit signal intermédiaire, avant son échantillonnage par ladite horloge locale, lesdits moyens de rephasage étant commandés par des moyens de commande eux-mêmes commandés par lesdits moyens de détection de glissement.

D'autres objets et caractéristiques de la présente invention apparaîtront à la lecture de la description suivante d'un exemple de réalisation, faite en relation avec les dessins ci-annexés dans lesquels :

- la figure 1 est un schéma d'un exemple de réalisation d'un dispositif suivant la présente invention,
- la figure 2 est un chronogramme destiné à illustrer le fonctionnement d'un dispositif tel qu'illustré sur la figure 1,

- la figure 3 est un tableau destiné à illustrer le fonctionnement d'un dispositif tel qu'illustré sur la figure 1.

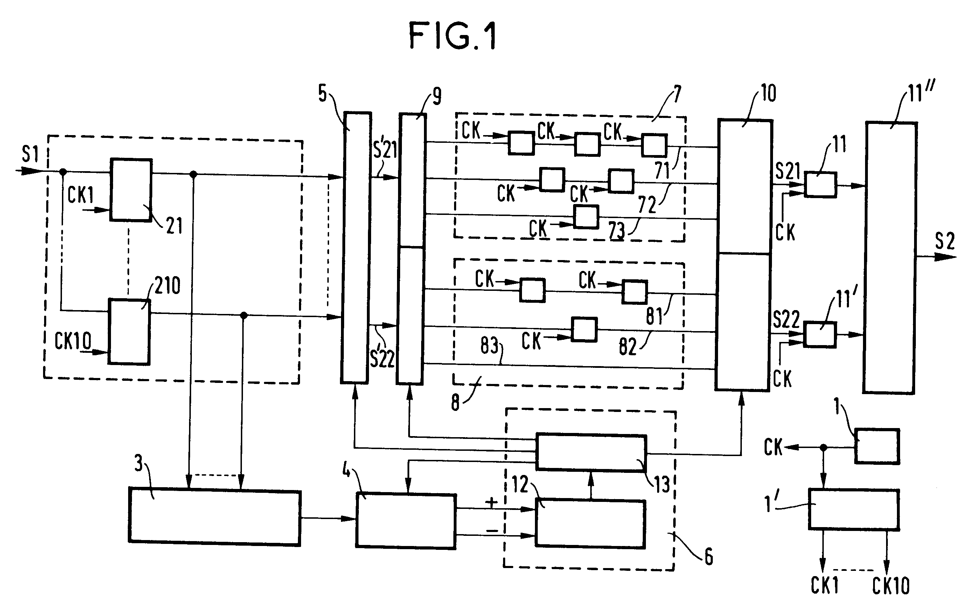

La figure 1 illustre un dispositif de rephasage d'un signal numérique incident, noté S1, transmis suivant une transmission synchrone et susceptible d'être affecté de gigue.

Ce dispositif comporte une horloge locale, notée 1, délivrant un signal dit d'horloge locale, noté CK, de période T, synchrone du signal d'horloge définissant ladite transmission synchrone, des moyens 1' pour générer, à partir dudit signal d'horloge locale, un ensemble de N signaux dits d'horloge d'échantillonnage, (avec à titre d'exemple N égal à 10) déphasés les uns par rapport aux autres de $\frac{T}{N}$, et des moyens notés 2, pour échantillonner le signal numérique incident au moyen de ces N signaux d'horloge d'échantillonnage.

Dans l'exemple de réalisation illustré, où le débit du signal numérique incident est relativement élevé, (à titre d'exemple égal à 155 Mb/s), le signal d'horloge locale CK a, en vue de faciliter la réalisation de ce dispositif, une fréquence moitié de celle (dans ce cas égale à 155MHz), du signal d'horloge définissant ladite transmission synchrone, auquel cas les N échantillons ainsi obtenus le sont pour une durée égale à deux temps élémentaires (ou temps bits) du signal numérique incident.

Les moyens 2 comportent plus précisément, dans cet exemple, un ensemble de dix bascules, en l'occurrence de type "D", notées 21, 22,...., 29, 210, recevant sur leur entrée "D" le signal numérique incident S1, et sur leur entrée d'horloge, respectivement l'un des signaux d'horloge d'échantillonnage CK1 à CK10.

Le dispositif de rephasage illustré sur la figure 1 comporte également des moyens, notés 3, permettant, à partir des échantillons ainsi obtenus, de repérer les transitions du signal numérique incident, pour en déduire des échantillons dits sélectionnés de ce signal, choisis pour représenter ses valeurs numériques successives, et obtenus pour des instants d'échantillonnage dits sélectionnés situés de façon fixe par rapport auxdites transitions. Les différents instants d'échantillonnage parmi lesquels sont sélectionnés ces instants d'échantillonnage sélectionnés sont notés PHI1 à PHI10 et coïncident avec les transitions dites actives des signaux d'horloge d'échantillonnage CK1 à CK10 (c'est-à-dire avec les transitions de ces signaux qui permettent la prise en compte, par les bascules 21 à 210, du signal numérique incident).

Le repérage des transitions réalisé par les moyens 3 pourra simplement être effectué, de façon non décrite ici dans le détail, en comparant deux à deux les échantillons successifs ainsi obtenus.

Dans l'exemple de réalisation décrit, où le signal d'horloge locale a une fréquence moitié de celle du signal d'horloge définissant ladite transmission synchrone, l'échantillonnage du signal incident par les N signaux d'horloge d'échantillonnage conduit à l'obtention de deux tels échantillons sélectionnés, choisis pour représenter les valeurs numériques du signal incident sur deux temps bits consécutifs, l'un, noté B1, dit de rang impair (incluant le premier temps bit reçu) l'autre, noté B2, dit de rang pair (incluant le deuxième temps bit reçu).

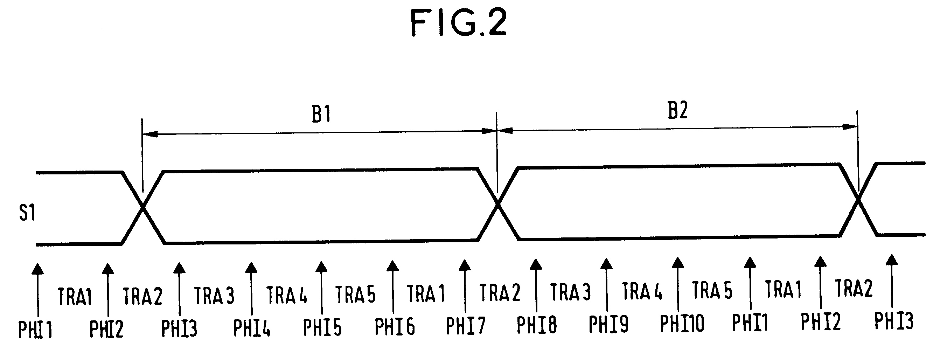

Les instants d'échantillonnage dits sélectionnés (tels que, à titre d'exemple, pour une phase donnée du signal S1 par rapport aux signaux d'horloge d'échantillonnage CK1 à CK10, correspondant au cas de la figure 2, les instants d'échantillonnage PHI5 et PHI10) sont plus précisément pris à une distance fixe des instants d'échantillonnage détectés comme encadrant les transitions du signal S1, (tels que, à titre d'exemple, ceux repérés PHI2, PHI3, PHI7 et PHI8 sur la figure 2). Avantageusement, un échantillon sélectionné, obtenu pour un instant d'échantillonnage sélectionné (tel que PHI5 par exemple sur la figure 2), et choisi pour représenter la valeur numérique du signal incident sur un temps bit (tel que B1 par exemple), sera choisi de façon à être situé sensiblement au milieu de ce temps bit, soit dans l'exemple considéré à une distance de $\frac{2T}{10}$ de celui (tel que PHI3) des instants d'échantillonnage (tels que PHI2 et PHI3) qui encadrent la première des transitions de ce temps bit en étant situé à l'intérieur de ce temps bit, ou encore à une distance de $\frac{3T}{10}$ de celui (tel que PHI2) des instants d'échantillonnage (tels que PHI2 et PHI3) qui encadrent la première des transitions de ce temps bit, en étant situé à l'intérieur du temps bit précédent.

Les moyens 3 fournissent en l'occurrence un signal de sortie indiquant dans lesquels des intervalles de temps notés TRA1 à TRA5 sur la figure 2, et séparant des instants d'échantillonnage consécutifs (cette notation étant en l'ocurrence commune aux temps bits de rang impair et aux temps bits de rang pair), se situent les transitions du signal numérique incident.

Le dispositif de rephasage illustré sur la figure 1 comporte en outre des moyens, notés 4, pour détecter un éventuel glissement, dans un sens ou dans l'autre, dû à la gigue, des transitions du signal incident repérées par les moyens 3 et donc desdits instants d'échantillonnage sélectionnés.

Les moyens 4 fournissent deux signaux de sortie notés "+" et "-", indiquant, lorsqu'ils sont actifs, qu'un tel glissement a lieu, le signal "+" étant par exemple actif lorsque ladite gigue tend à avancer les instants d'apparition des transitions du signal numérique incident, et le signal "- " étant alors actif lorsqu'elle tend à les retarder.

Le dispositif de rephasage illustré sur la figure 1 comporte en outre des moyens pour générer un signal numérique dit intermédiaire ayant mêmes valeurs numériques que le signal numérique incident, mais dont les transitions correspondent auxdits instants d'échantillonnage sélectionnés.

Ces moyens pour générer ce signal numérique intermédiaire comportent, dans l'exemple de réalisation illustré, des moyens dits premiers moyens de sélection, notés 5, permettant pour chacun de deux temps bits, de rang pair et de rang impair, du signal incident, de sélectionner le signal de sortie de l'une ou l'autre des bascules 21 à 210, sous la commande de moyens de commande 6 commandés eux-mêmes par les moyens 4 de détection de glissement. Les premiers moyens de sélection 5 présentent ainsi deux sorties fournissant respectivement les signaux ainsi obtenus pour les temps bits de rang impair et pour les temps bits de rang pair, et notés respectivement S'21 et S'22.

Dans l'exemple de réalisation considéré où le signal d'horloge locale a une fréquence moitié de celle du signal d'horloge définissant ladite transmission synchrone, ledit signal numérique intermédiaire serait formé des signaux S'21 et S'22 entrelacés pour former un signal de débit égal au double du débit de chacun de ces signaux.

Le dispositif de rephasage illustré sur la figure 1 comporte en outre des moyens de rephasage dudit signal numérique intermédiaire par rapport audit signal d'horloge locale, fournissant un signal numérique dit rephasé et comportant eux-mêmes des moyens pour faire subir à ce signal numérique intermédiaire un retard variant par pas de T, dans un sens ou dans l'autre, à partir d'une valeur initiale déterminée, à chaque glissement détecté entraînant un rattrapage, dans un sens ou dans l'autre, des transitions du signal d'horloge locale par les transitions du signal numérique intermédiaire.

Dans l'exemple illustré sur la figure 1, ces moyens de rephasage comportent deux ensembles, notés respectivement 7 et 8, de trois voies dites de rephasage, notées respectivement 71, 72, 73 pour l'ensemble 7, et 81, 82, 83 pour l'ensemble 8, ces voies de rephasage comportant chacune, en série un nombre distinct de bascules, en l'occurrence du type "D", dont l'entrée d'horloge reçoit le signal d'horloge local CK, ce nombre de bascules variant d'une unité d'une voie de rephasage à l'autre, et les voies de rephasage 71, 72, 73, 81, 82 et 83 comportant, dans cet exemple, des bascules en nombre respectivement égal à 3, 2, 1, 2, 1 et 0.

Dans l'exemple illustré sur la figure 1, ces moyens de rephasage comportent en outre des moyens dits seconds et troisièmes moyens de sélection, notés respectivement 9 et 10, placés respectivement en amont et en aval des ensembles 7 et 8, et permettant d'appliquer, sous la commande des moyens de commande 6, les uns, 9, le signal S'21 à l'une ou l'autre des voies de rephasage 71, 72, 73, et le signal S'22 à l'une ou l'autre des voies de rephasage 81, 82, 83, et les autres, 10, d'appliquer le signal issu de l'une ou l'autre des voies de rephasage 71, 72, 73, à l'une de ses sorties, et le signal issu de l'une ou l'autre des voies de rephasage 81, 82, 83, à une autre de ses sorties, ces deux sorties fournissant en l'occurrence deux signaux numériques notés S21 et S22, de débit moitié de celui du signal numérique incident.

Dans l'exemple illustré sur la figure 1, ces moyens de rephasage comportent en outre deux bascules du type "D", notées respectivement 11 et 11', recevant sur leur entrée "D", respectivement les signaux S21 et S22, et sur leur entrée d'horloge, le signal d'horloge locale CK. On notera cependant que si, contrairement à l'exemple de réalisation illustré, la voie de rephasage 83 comportait également une, ou plusieurs, bascules, ces bascules 11 et 11' ne seraient pas nécessaires.

Dans l'exemple de réalisation illustré, correspondant plus particulièrement au cas où ce dispositif de rephasage est utilisé dans un équipement dit de ligne d'une liaison de transmission, les signaux numériques obtenus en sortie des bascules 11 et 11' sont appliqués à des moyens de multiplexage, notés 11'', permettant de fournir un signal numérique, noté S2, de débit égal à celui du signal numérique incident, ce signal S2 étant en outre rephasé par rapport au signal d'horloge locale. Ces moyens de multiplexage 11'' pourraient cependant ne pas être nécessaires, notamment dans le cas d'un dispositif de rephasage utilisé dans un équipement dit de terminaison d'une liaison de transmission.

Les moyens de commande 6 comportent dans cet exemple un compteur 12 décrémenté par le signal "+", incrémenté par le signal "-", et apte à présenter 25 états de comptage différents.

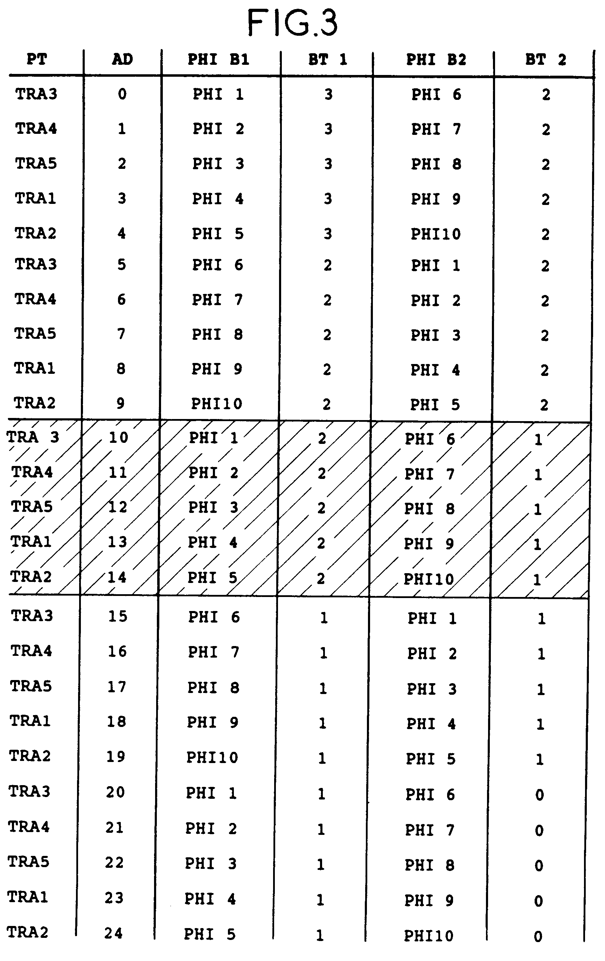

Les moyens de commande 6 comportent en outre des moyens dits de décodage, notés 13, utilisés, dans l'exemple de réalisation illustré, d'une part pour fournir des informations destinées aux moyens 4 de détection de glissement, et codant en l'occurrence celui des intervalles de temps tels que TRA1 à TRA5 qui correspond à l'état de comptage en cours du compteur 12 (en vue de réaliser ladite détection de glissement par comparaison de ces informations à celles issues des moyens 3 de repérage de transitions) et d'autre part pour assurer la commande desdits premiers, deuxièmes et troisièmes moyens de sélection, de la façon maintenant expliquée en relation avec les figures 2 et 3.

On suppose dans cet exemple que les transitions dites actives du signal d'horloge locale, c'est-à-dire permettant la prise en compte, par ce signal d'horloge locale, des signaux appliqués aux bascules "D" formant lesdites voies de rephasage sont situées entre les instants d'échantillonnage PHI5 et PHI6.

On suppose en outre, dans cet exemple, que le compteur 12 a, à l'initialisation, un état de comptage prépositionné à l'une des valeurs 10 à 14, c'est-à-dire que le dispositif de rephasage est initialisé pour fonctionner dans la zone médiane, hachurée, du tableau de la figure 3, dans lequel la deuxième colonne en partant de la gauche de ce tableau indique l'état de comptage de ce compteur, noté AD.

A titre d'exemple, on supposera dans ce qui suit que l'état de comptage du compteur 12 est initialisé à la valeur 10.

On suppose en outre, dans cet exemple, que les premiers échantillons obtenus du signal numérique incident montrent que les transitions de ce signal se situent, comme indiqué dans la première colonne du tableau de la figure 3, notée PT, dans les intervalles de temps notés TRA3 sur la figure 2 (où la phase du signal S1 par rapport aux signaux d'échantillonnage ne correspond cependant pas au cas supposé ici), compris entre les instants d'échantillonnage PHI3 et PHI4 (pour les temps bits de rang impair) ou PHI8 et PHI9 (pour les temps bits de rang pair).

Si tel n'est pas le cas, une phase d'initialisation sera mise en oeuvre, en vue de positionnner le compteur 12 à une valeur correspondant à la situation initiale réelle des transitions de ce signal par rapport aux instants d'échantillonnage PHI1 à PHI10.

En considérant donc le cas où les premiers échantillons obtenus du signal numérique incident montrent que les transitions de ce signal se situent dans les intervalles de temps notés TRA3, les instants d'échantillonnage choisis pour représenter la valeur numérique des premiers temps élémentaires, ou temps bits, du signal numérique incident, sont, comme indiqué respectivement dans les colonnes repérées PHIB1 et PHIB2 du tableau de la figure 3, pour les temps bits B1 de rang impair l'instant d'échantillonnage PHI1, et pour les temps bits B2 de rang pair l'instant d'échantillonnage PHI6.

Les premiers moyens de sélection 5 sélectionnent alors les signaux de sortie des bascules 21 et 26. Les seconds moyens de sélection 9 appliquent en outre les signaux obtenus sur les sorties de ces bascules respectivement aux voies de rephasage 72 et 82, comme indiqué dans les colonnes notées BT1 et BT2 du tableau de la figure 3, indiquant respectivement le nombre de bascules des voies de rephasage ainsi sélectionnées, soit ici 2 et 1, respectivement. Les troisièmes moyens de sélection 10 sélectionnent en outre les signaux de sortie des voies de rephasage 72 et 82.

Si, pour les temps bits du signal numérique incident suivant ces premiers temps bits reçus, la comparaison effectuée par les moyens de détection de glissement 4 indique que les transitions de ce signal se situent toujours dans les intervalles de temps TRA3, alors les échantillons choisis pour représenter la valeur numérique de ce signal pour ces temps bits suivants continuent à être ceux obtenus pour les instants d'échantillonnage PHI1 et PHI6, les signaux obtenus sur les bascules 21 et 26 continuent d'être appliqués respectivement aux voies de rephasage 72 et 82, et les signaux issus de ces deux voies de rephasage continuent de fournir les signaux S21 et S22.

Si cette comparaison effectuée par les moyens de détection de glissement 4 indique par contre que les transitions du signal incident ne se situent plus dans les intervalles de temps repérés TRA3, mais dans les intervalles de temps repérés TRA4, compris entre les instants d'échantillonnage PHI4 et PHI5 (pour les temps bits de rang impair), ou PHI9 et PHI10 (pour les temps bits de rang pair), c'est-à-dire si le signal numérique incident est affecté de gigue tendant à retarder les instants d'apparition de ses transitions, alors les instants d'échantillonnage choisis sont, comme indiqué à la ligne suivante du tableau de la figure 3, les instants d'échantillonnage PHI2 (pour les temps bits de rang impair) et PHI7 (pour les temps bits de rang pair), les signaux obtenus en sortie des premiers moyens de sélection (correspondant alors aux échantillons obtenus en sortie des bascules 22 et 27) continuant cependant d'être appliqués, par les seconds moyens de sélection 9, respectivement aux voies de rephasage 72 et 82, et les troisièmes moyens de sélection 10 continuant de même de sélectionner les signaux de sortie de ces deux voies de rephasage 72 et 82.

Si l'amplitude de la gigue ainsi détectée continue de croître dans le même sens, alors on pourra sélectionner successivement, comme indiqué dans les lignes suivantes du tableau de la figure 3, les instants d'échantillonnage PHI3 et PHI8, PHI4 et PHI9, PHI5 et PHI10, les voies de rephasage sélectionnées continuant cependant d'être les voies de rephasage 72 et 82.

Lorsque cette gigue conduit, comme indiqué à la ligne suivante du tableau de la figure 3, à sélectionner les instants d'échantillonnage PHI6 (pour les temps bits de rang impair) et PHI1 (pour les temps bits de rang pair), alors la voie de rephasage sélectionnée dans l'ensemble 7 ne sera plus la voie de rephasage 72 mais la voie de rephasage 73, le signal appliqué à cette voie de rephasage 73 étant alors le signal issu de la bascule 26, la voie de rephasage sélectionnée de l'ensemble 8 étant toujours la voie de rephasage 82, et le signal appliqué à cette voie de rephasage 82 étant alors le signal issu de la bascule 21. La voie de rephasage ainsi sélectionnée dans l'ensemble 7 ne comportant plus alors qu'une bascule, au lieu de deux précédemment, il se produit un effet d'avance relatif qui permet la prise en compte, par des transitions consécutives du signal d'horloge locale, de valeurs numériques consécutives du signal numérique incident, pour des temps bits de rang impair, obtenues pourtant pour des instants d'échantillonnage situés, l'un (PHI5) avant l'une de ces transitions, et l'autre (PHI6) après l'autre de ces transitions.

Si l'amplitude de la gigue continue à croître dans le même sens, jusqu'à conduire à nouveau à la sélection des instants d'échantillonnage PHI1 (pour les temps bits de rang impair) et PHI6 (pour les temps bits de rang pair), alors un raisonnement similaire au précédent montre que la voie de rephasage sélectionnée sera alors non plus la voie de rephasage 82, mais la voie de rephasage 83, la voie de rephasage 73 continuant cependant d'être sélectionnée.

Un raisonnement similaire pourrait être fait pour l'autre sens possible pour ladite gigue, et conduirait, de temps à autre, à sélectionner une voie de rephasage comportant un nombre de bascules supérieur à celui de la voie de rephasage sélectionnée précédemment, en vue d'obtenir alors un effet de retard relatif aboutissant de même à la prise en compte, par des transitions consécutives du signal d'horloge locale, de valeurs numériques consécutives du signal incident, pour des temps bits de même rang (pair ou impair) obtenues pourtant pour des instants d'échantillonnage sélectionnés situés l'un avant l'une de ces transitions, et l'autre après l'autre de ces transitions.

On notera cependant que pour que ce dispositif puisse fonctionner correctement, il est nécessaire, pour pouvoir commuter une voie de rephasage sur une autre voie de rephasage, d'avoir appliqué préalablement à cette dernière un, ou plusieurs (suivant le cas, c'est-à-dire suivant le nombre de bascules de cette voie de rephasage) échantillons obtenus précédemment, c'est-à-dire avant commutation, ces échantillons étant bien entendu ceux obtenus pour les instants d'échantillonnage choisis après commutation, ces derniers étant déterminés à partir de l'état de comptage du compteur 12 et du sens de la gigue, étant entendu que, ladite gigue étant un phénomène lent, les instants d'échantillonnage choisis après commutation ne pourront pas être distants en l'occurrence de plus de T/10 des instants d'échantillonnage choisis avant commutation.

On notera par ailleurs que dans le cas où les transitions dites actives du signal d'horloge locale seraient choisies situées entre les transitions dites actives des signaux d'horloge d'échantillonnage CK10 et CK1, les voies de rephasage 71 et 81, 72 et 82, 73 et 83, comporteraient un même nombre de bascules car il ne serait pas nécessaire de retarder d'une période d'horloge locale la sortie des temps bits de rang impair de l'ensemble 7 par rapport à la sortie des temps bits de rang pair de l'ensemble 8.

On notera en outre que si en pratique les différents signaux d'horloge ainsi générés localement ne sont pas parfaitement stables, il peut se produire que les transitions dites actives du signal d'horloge locale coïncident avec les transitions dites actives de l'un des signaux d'horloge d'échantillonnage. Pour assurer malgré tout un fonctionnement correct dans ces conditions, il peut être nécessaire d'effectuer une opération dite de prérephasage, entre certaines des bascules 21 à 210 et les premiers moyens de sélection 5.

Ainsi, dans le cas par exemple où les transitions actives du signal d'horloge locale seraient situées, seulement de façon théorique, entre les transitions actives des signaux d'horloge d'échantillonnage CK7 et CK8, un tel prérephasage pourrait être réalisé en prévoyant, entre les bascules 26 à 210 et les premiers moyens de sélection 5, cinq bascules "D" dites de prérephasage dont les entrées "D" recevraient respectivement les signaux issus des bascules 26 à 210 et dont les entrées d'horloge recevraient respectivement les signaux d'horloge d'échantillonnage CK1 à CK5.

Dans ce cas si l'on est conduit à choisir, à un instant donné, l'instant d'échantillonnage PHI6 au lieu de l'instant d'échantillonnage PHI5 choisi précédemment, l'introduction de la bascule de prérephasage disposée en sortie de la bascule 26 introduira un retard $\frac{T}{2}$ qui sera cependant compensé par la commutation à cet instant d'une voie de rephasage à une autre voie de rephasage comportant un nombre inférieur de bascules, suivant le même raisonnement que celui indiqué plus haut.

Le dispositif de rephasage illustré à titre d'exemple sur la figure 1 permet donc d'assurer un tel rephasage en présence d'une gigue pouvant atteindre une amplitude égale à 2T, c'est-à-dire en présence d'un glissement des transitions du signal numérique incident pouvant atteindre, à un instant donné, deux temps bits, dans un sens ou dans l'autre, par rapport à l'instant initial d'application de ce signal à ce dispositif.

On notera que pour assurer un tel rephasage pour le cas de gigue d'amplitude maximale supérieure à 2T, il suffira de prévoir un nombre suffisant de voies de rephasage et de bascules formant ces voies de rephasage (en modifiant bien entendu en conséquence les moyens de sélection et leurs moyens de commande).

## Revendications

1) Dispositif de réception d'un signal numérique susceptible d'être affecté de gigue, comprenant : une horloge locale (CK) fournissant un signal d'horloge locale de période constante T appropriée à l'échantillonnage dudit signal numérique ; des moyens pour générer, à partir du signal d'horloge locale, un ensemble de N signaux d'horloge d'échantillonnage (CK1 à CK10) de même période T que le signal d'horloge locale, mais déphasés chacun du suivant de T/N ; caractérisé en ce qu'il comprend en outre : des moyens (2) pour échantillonner ledit signal numérique à l'aide de chacun desdits signaux d'horloge d'échantillonnage ; et des moyens (3) pour repérer, à partir des échantillons ainsi obtenus, les transitions dudit signal numérique, ainsi que pour en dériver un signal numérique dit intermédiaire ayant les mêmes valeurs numériques que ledit signal numérique et dont les transitions correspondent à un signal d'horloge d'échantillonnage sélectionné.

2) Dispositif de réception d'un signal numérique ayant fait l'objet d'une transmission synchrone, mais susceptible d'être affecté de gigue, comprenant : une horloge locale (CK) fournissant un signal d'horloge locale de période T appropriée à l'échantillonnage dudit signal numérique, et des moyens de réception fournissant un signal numérique dit intermédiaire ayant les mêmes valeurs numériques que ledit signal numérique et dont les transitions successives correspondent à celles dudit signal d'horloge locale ; caractérisé en ce qu'il comprend en outre : des moyens (4) pour détecter un éventuel glissement dans le temps, dû à la gigue, entre les transitions dudit signal intermédiaire et de ladite horloge locale, ainsi que des moyens de rephasage opérant un déphasage sélectif (6, 7, 8, 9, 10), par pas de T, dudit signal intermédiaire, avant son échantillonnage par ladite horloge locale, lesdits moyens de rephasage étant commandés par des moyens de commande eux-mêmes commandés par lesdits moyens de détection de glissement.

3) Dispositif selon la revendication 2, caractérisé en ce que lesdits moyens de rephasage comportent :
- un ensemble (7-8) comportant une pluralité de voies dites de rephasage comportant chacune, en série, un nombre distinct de bascules activées par ledit signal d'horloge locale, ce nombre variant d'une unité d'une voie de rephasage à une autre,
- des moyens de sélection (9) dits second moyens de sélection, permettant d'appliquer ledit signal numérique intermédiaire à l'une ou l'autre desdites voies de rephasage,
- des moyens de sélection (10) dits troisièmes moyens de sélection, permettant d'obtenir un signal numérique rephasé en sortie de l'une ou l'autre desdites voies de rephasage,
- des moyens (6) de commande desdits deuxièmes et troisièmes moyens de sélection, eux-mêmes commandés par lesdits moyens (4) pour détecter un éventuel glissement.

4) Dispositif selon la revendication 3, caractérisé en ce que, la période dudit signal d'horloge locale étant choisie égale au double de la période du signal d'horloge définissant ladite transmission synchrone, et ledit signal numérique intermédiaire étant alors disponible sous forme de deux signaux de débit égal à la moitié de celui du signal numérique incident et ayant pour valeurs numériques l'un les valeurs numériques du signal numérique incident pour les temps bits de rang impair de ce signal, et l'autre les valeurs numériques du signal numérique incident pour les temps bits de rang pair de ce signal, lesdits moyens de rephasage comportent deux ensembles (7,8) de voies de rephasage comportant chacun une pluralité de telles voies de rephasage (71, 72, 73, 81, 82, 83).

**5)** Dispositif selon l'une des revendications 3 et 4, caractérisé en ce que lesdits moyens de commande (6) comportent :

- un compteur (12) apte à être incrémenté, ou décrémenté, en cas de glissement détecté, dans un sens ou dans l'autre,
- des moyens (13) de décodage des états de comptage de ce compteur.

**6)** Dispositif selon la revendication 1, caractérisé en ce qu'il comprend en outre des moyens (4) pour détecter un éventuel glissement dans le temps, dû à la gigue entre les transitions dudit signal intermédiaire et de ladite horloge locale, ainsi que des moyens de déphasage sélectif (6, 7, 8, 9, 10), par pas de T, dudit signal intermédiaire, avant son échantillonnage par ladite horloge locale, lesdits moyens de déphasage sélectif étant commandés par des moyens de commande eux-mêmes commandés par lesdits moyens de détection de glissement.

**7)** Dispositif selon la revendication 6, caractérisé en ce que lesdits moyens de rephasage comportent :

- un ensemble (7-8) comportant une pluralité de voies dites de rephasage comportant chacune, en série, un nombre distinct de bascules activées par ledit signal d'horloge locale, ce nombre variant d'une unité d'une voie de rephasage à une autre,
- des moyens de sélection (9) dits second moyens de sélection, permettant d'appliquer ledit signal numérique intermédiaire à l'une ou l'autre desdites voies de rephasage,
- des moyens de sélection (10) dits troisièmes moyens de sélection, permettant d'obtenir un signal numérique rephasé en sortie de l'une ou l'autre desdites voies de rephasage,
- des moyens (6) de commande desdits deuxièmes et troisièmes moyens de sélection, eux-mêmes commandés par lesdits moyens (4) pour détecter un éventuel glissement.

**8)** Dispositif selon la revendication 7, caractérisé en ce que, la période dudit signal d'horloge locale étant choisie égale au double de la période du signal d'horloge définissant ladite transmission synchrone, et ledit signal numérique intermédiaire étant alors disponible sous forme de deux signaux de débit égal à la moitié de celui du signal numérique incident et ayant pour valeurs numériques l'un les valeurs numériques du signal numérique incident pour les temps bits de rang impair de ce signal, et l'autre les valeurs numériques du signal numérique incident pour les temps bits de rang pair de ce signal, lesdits moyens de rephasage comportent deux ensembles (7,8) de voies de rephasage comportant chacun une pluralité de telles voies de rephasage (71, 72, 73, 81, 82, 83).

**9)** Dispositif selon l'une des revendications 7 et 8, caractérisé en ce que lesdits moyens de commande (6) comportent :

- un compteur (12) apte à être incrémenté, ou décrémenté, en cas de glissement détecté, dans un sens ou dans l'autre,
- des moyens (13) de décodage des états de comptage de ce compteur.

# FIG.1

EP 0 629 062 A1

FIG.2

# FIG.3

| PT | AD | PHI B1 | BT 1 | PHI B2 | BT 2 |
|---|---|---|---|---|---|
| TRA3 | 0 | PHI 1 | 3 | PHI 6 | 2 |
| TRA4 | 1 | PHI 2 | 3 | PHI 7 | 2 |
| TRA5 | 2 | PHI 3 | 3 | PHI 8 | 2 |
| TRA1 | 3 | PHI 4 | 3 | PHI 9 | 2 |
| TRA2 | 4 | PHI 5 | 3 | PHI10 | 2 |
| TRA3 | 5 | PHI 6 | 2 | PHI 1 | 2 |
| TRA4 | 6 | PHI 7 | 2 | PHI 2 | 2 |
| TRA5 | 7 | PHI 8 | 2 | PHI 3 | 2 |
| TRA1 | 8 | PHI 9 | 2 | PHI 4 | 2 |
| TRA2 | 9 | PHI10 | 2 | PHI 5 | 2 |
| TRA 3 | 10 | PHI 1 | 2 | PHI 6 | 1 |
| TRA4 | 11 | PHI 2 | 2 | PHI 7 | 1 |
| TRA5 | 12 | PHI 3 | 2 | PHI 8 | 1 |
| TRA1 | 13 | PHI 4 | 2 | PHI 9 | 1 |
| TRA2 | 14 | PHI 5 | 2 | PHI10 | 1 |
| TRA3 | 15 | PHI 6 | 1 | PHI 1 | 1 |
| TRA4 | 16 | PHI 7 | 1 | PHI 2 | 1 |
| TRA5 | 17 | PHI 8 | 1 | PHI 3 | 1 |
| TRA1 | 18 | PHI 9 | 1 | PHI 4 | 1 |
| TRA2 | 19 | PHI10 | 1 | PHI 5 | 1 |
| TRA3 | 20 | PHI 1 | 1 | PHI 6 | 0 |
| TRA4 | 21 | PHI 2 | 1 | PHI 7 | 0 |
| TRA5 | 22 | PHI 3 | 1 | PHI 8 | 0 |
| TRA1 | 23 | PHI 4 | 1 | PHI 9 | 0 |
| TRA2 | 24 | PHI 5 | 1 | PHI10 | 0 |

**Office européen des brevets**

## RAPPORT DE RECHERCHE EUROPEENNE

Numero de la demande

EP 94 40 1153

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| X | EP-A-0 317 159 (AMERICAN TELEPHONE AND TELEGRAPH COMPANY) * page 2, ligne 30 - ligne 37 * | 1 | H04L7/033 |
| A | * page 3, ligne 26 - ligne 52 * * page 5, ligne 26 - ligne 55 * --- | 2-9 | |
| A | WO-A-89 09520 (BELL TELEPHONE MANUFACTURING COMPANY) * page 1, ligne 2 - ligne 9 * * page 3, ligne 17 - ligne 27 * * page 4, ligne 9 - ligne 24 * * page 12, ligne 2 - ligne 24 * --- | 1-9 | |
| A | EP-A-0 023 852 (THOMSON-CSF) * page 3, ligne 8 - ligne 18 * ----- | 3,7 | |
| | | | **DOMAINES TECHNIQUES RECHERCHES (Int.Cl.5)** |
| | | | H04L |

Le présent rapport a été établi pour toutes les revendications

| Lieu de la recherche | Date d'achèvement de la recherche | Examinateur |
|---|---|---|
| LA HAYE | 6 Septembre 1994 | Pieper, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................
& : membre de la même famille, document correspondant

EPO FORM 1503 03.82 (P04C02)